# EUROPÄISCHE PATENTANMELDUNG

(11) **EP 1 605 193 A1**
(43) Veröffentlichungstag der Anmeldung: **14.12.2005**
(21) Anmeldenummer: 05106600.9
(22) Anmeldetag: 22.11.2002
(51) Int. Cl.: F16K 17/30

(54) **Rohrbruchventil**

(30) Priorität: 23.11.2001 DE 20119058 U
(62) Teilanmeldung aus: 02026080.8
(71) Anmelder: VOSS Fluid GmbH & Co. KG, 51688 Wipperfürth (DE)
(72) Erfinder: Dr. Pott, Harald, 42499 Hückeswagen (DE); Terlau, Norbert, 51515 Kürten (DE); Mitterer, Rainer, 51688 Wipperfürth (DE); Schröer, Bettina, 51688 Wipperfürth (DE)
(74) Vertreter: Patentanwälte Dr. Solf & Zapf

(57) **Zusammenfassung**

Die Erfindung betrifft ein Rohrbruchventil zum Verschluß einer Druckmittelleitung im Schadensfall, umfassend
- ein Gehäuse (1), welches einen Innenraum (2) aufweist,
- einen von einer Feder (3) in eine Offenstellung vorgespannten Ventilteller (4) zum Verschluß des Innenraums (2), wobei der Ventilteller (4) in einer Verschlußstellung mit einem Umfangsrand an einem korrespondierenden Dichtsitz anliegt,
- einen Schaft (5), der einendig einen Kopf (6) zur Anlage der Feder (3) und anderendig mindestens ein die Außenseite des Ventiltellers (4) beaufschlagendes Sicherungselement aufweist,
- einen im Innenraum (2) angeordneten, Strömungsdurchgänge (8) für das Druckmittel aufweisenden Einsatzkörper (9).

Der Ventilteller (4) und der Einsatzkörper (9) werden zentral von dem Schaft (5) durchgriffen, wobei der Ventilteller (4) auf seiner dem Einsatzkörper (9) zugewandten Seite einen zentrischen, im Wesentlichen hohlzylindrischen Führungsansatz (34) für die Feder (3) aufweist.

## Beschreibung

Die vorliegende Erfindung betrifft ein Rohrbruchventil zum Verschluß einer Druckmittelleitung im Schadensfall, umfassend
- ein Gehäuse, welches einen Innenraum aufweist,
- einen von einer Feder in eine Offenstellung vorgespannten Ventilteller zum Verschluß des Innenraums, wobei der Ventilteller in einer Verschlußstellung mit einem Umfangsrand an einem korrespondierenden Dichtsitz des Gehäuses anliegt,
- einen Schaft, der einendig einen Kopf zur Anlage der Feder und anderendig mindestens ein die Außenseite des Ventiltellers beaufschlagendes Sicherungselement aufweist,
- einen im Innenraum angeordneten, Strömungsdurchgänge für das Druckmittel aufweisenden Einsatzkörper,
wobei der Ventilteller und der Einsatzkörper zentral von dem Schaft durchgriffen werden.

Der Zweck eines derartigen Ventils, das die Funktion eines Rückschlagventils erfüllt, besteht insbesondere darin, das Auftreten gefahrdrohender Zustände in Hydraulikanlagen, wie hydraulisch betätigten Kolben-Zylinder-Einrichtungen, zum Beispiel in Hebebühnen oder in Greifer- und Transportarmen, zu vermeiden. Wenn in einer der hydraulischen Arbeitseinrichtung vorgeordneten Leitung ein Bruch oder eine größere Leckage auftritt, kommt es schlagartig zu einem Abfall des Arbeitsdruckes des Druckmittels. Ausgelöst durch diesen Druckabfall spricht das Rohrbruchventil an, indem es schließt und dadurch ein Zurückfließen des Fluids in die defekte Leitung und durch die Bruchstelle hindurch in die Umgebung verhindert. In den dem Ventil nachgeordneten Leitungsabschnitten kann so der bestehende Druck weitestgehend aufrechterhalten werden, wodurch beispielsweise eine ausgefahrene Hebebühne oder ein angehobener Greiferarm nahezu unverändert in Position bleibt. Bei den bekannten Rohrbruchventilen sind dabei verschiedene technische Lösungen konzipiert worden, die es gestatten, den Ansprechdruck des Ventils nach Bedarf einzustellen. Dies ist z.B. bei einem Rohrbruchventil ähnlich der eingangs genannten Art der Fall, das aus der britischen Patentschrift GB 556 863 bekannt ist. Dieses bekannte Ventil umfaßt dabei einen massiven buchsenartigen Einsatzkörper, der eine zentrische Bohrung und radial weiter außen liegende bogenförmige Durchtrittsöffnungen aufweist. Der Schaft des Ventils ist jedoch mehrteilig aufgebaut und neben den genannten Merkmalen weist das Ventil eine Gesamtkonstruktion auf, die seine Montage relativ kompliziert und seine Herstellung aufwändig gestalten.

Ein einstellbares Rohrbruchventil, das vollständig der eingangs genannten Art entspricht, ist ebenfalls bekannt. Bei diesem Ventil ist der Einsatzkörper wie gemäß der genannten britischen Patentschrift als vorzugsweise aus Kusntstoff bestehender buchsenartiger Massivkörper aufgebaut und umfaßt die Federwendel. Im Querschnitt ist der Einsatzkörper dabei jedoch zahnradförmig gestaltet, wobei an seiner Peripherie kreisförmige Zahnlücken ausgebildet sind, die mit der Gehäuseinnenwand die Strömungsdurchgänge für das Druckmittel bilden. Der Einsatzkörper ist in einem Absatz des Gehäuseinnenraumes von einem Sprengring mit Axialspiel gehalten. Der Schaft ist einstückig ausgeführt und an der Außenseite des Ventiltellers mit einer einstellbaren Sicherungsmutter versehen.

Der vorliegenden Erfindung liegt die Aufgabe zugrunde, ein Rohrbruchventil der eingangs genannten Art zu schaffen, das sich bei hoher Montagefreundlichkeit sowie Betriebs- und Funktionssicherheit, insbesondere bei höchster Dichtungswirkung, durch eine einfachere und preisgünstiger Herstellungsweise auszeichnet, d.h. durch das die vorgenannten Probleme beseitigt oder zumindest auf ein Minimum reduziert werden können.

Erfindungsgemäß wird dies durch ein Rohrbruchventil der eingangs genannten Art erreicht, bei dem der Einsatzkörper als Blechformteil ausgebildet ist. Dabei kann es sich um ein Stanzbiegeteil handeln oder auch um ein besonderes einfaches, nur durch einen Stanzvorgang geformtes, ebenes Scheibenteil.

In alternativer Weise wird dies auch durch ein Rohrbruchventil der eingangs genannten Art erreicht, bei dem die Feder als Druckfederelement, insbesondere als Schraubenfeder, ausgebildet ist, wobei der Einsatzkörper ein äußeres, im Innenraum des Gehäuses umfangsgemäß befestigbares Halteteil und ein etwa mittig angeordnetes, im wesentlichen hohlzylindrisches Führungsteil für die Feder umfaßt.

Durch die erfindungsgemäße Ausführung des Einsatzkörpers ist es zunächst möglich, einerseits den Herstellungsaufwand des Einsatzkörpers bedeutend zu senken, indem dieser vorzugsweise als Stanz- oder Biege-Stanz-Teil - oder, was die Alternativausführung betrifft, auch als Spritzgußformteil aus Kunststoff oder Metall - gefertigt werden kann; andererseits ist das erfindungsgemäße Rohrbruchventil auch mit geringerem Aufwand montierbar, da die Erfindung problemlos eine Ausstattung des Einsatzkörpers mit Rastmitteln ermöglicht, die die Ausbildung einer kraft- und formschlüssigen Verbindung, insbesondere ein Verclipsen des Einsatzkörpers mit korrespondierenden Befestigungsmitteln der Wand des Gehäuseinnenraums, gestatten.

So ist es insbesondere mit Vorteil möglich, daß der von der Feder in Offenstellung vorgespannte Ventilteller, der Schaft mit seinem einendig ausgebildeten Kopf und mit dem anderendig angeordneten Sicherungselement sowie der Einsatzkörper und gegebenenfalls die nachfolgend noch beschriebene Tellerfeder eine vormontierte Baueinheit bilden. Diese vormontierte Baueinheit kann in weiterer vorteilhafter Ausgestaltung eine Einsatzhülse aufweisen, die im äußeren Umfangsbereich zwischen dem Einsatzkörper und dem Ventilteller angeordnet ist und dabei auch den mit dem Ventilteller zusammenwirkenden Dichtsitz aufweist. Zudem weist die Einsatzhülse auf ihrem Außenumfang Haltemittel zur Halterung innerhalb des Gehäuses auf. Diese Ausführung hat den Vorteil einer besonders einfachen Montage durch einfaches Einstecken der vormontierten Baugruppe in das Gehäuse. Zudem kann dabei auch die Baugruppe bezüglich des Ventil-Öffnungshubes und des Schließverhaltens fertig voreingestellt werden, und zwar wegen des integrierten Ventil-Dichtsitzes vorteilhafterweise unabhängig von Gehäusetoleranzen.

Hinsichtlich der Ausbildung des Einsatzkörpers bestehen verschiedene vorteilhafte Ausführungsmöglichkeiten. So kann der Einsatzkörper beispielsweise als kreisförmige, Durchbrüche aufweisende Scheibe ausgebildet sein, die das äußere, im Innenraum des Gehäuses befestigbare Halteteil bildet und an die vorzugsweise ein im wesentlichen senkrecht von der Scheibenebene abstehender Führungsstutzen angeformt sein kann, der das hohlzylindrische Führungsteil für die Feder bildet. Ein solcher Einsatzkörper kann an einem Absatz des Gehäuseinnenraumes im Wesentlichen axial spielfrei von einem Sprengring gehalten sein, der die Rastmittel für den Einsatzkörper bildet.

Wenn der Einsatzkörper als einfache (ebene) gelochte Scheibe ausgebildet ist, kann mit Vorteil ein entsprechendes hohlzylindrisches Führungsteil auch als Ansatz des Ventiltellers gebildet sein.

Alternativ ist es auch möglich, dass der Einsatzkörper als Korbarme aufweisender Korb ausgebildet ist, der mit einer im Durchmesser elastisch aufweitbaren bzw. komprimierbaren Randwulst das äußere, im Innenraum des Gehäuses befestigbare Halteteil bildet und an den ein in Längsrichtung des Gehäuses verlaufender Führungsstutzen angeformt ist, der das hohlzylindrische Führungsteil für die Feder bildet, wobei der Korb einen ringförmigen, durch Schlitze unterbrochenen Bodenbereich zur Anlage der Feder aufweist. Bei einer solchen Ausführung können die Rastmittel für den Einsatzkörper bevorzugt durch die genannte, mit Schlitzen versehene Randwulst des Einsatzkörpers gebildet sein. Dadurch kann vorteilhafterweise ein zusätzlicher Sprengring entfallen.

Was die zuerst genannte, scheibenartige und gegebenenfalls mit einem Führungstutzen versehene Ausbildung des Einsatzkörpers betrifft, so ist es möglich, einen das Halteteil bildenden Randbereich der Scheibe in Form von zwei einendig miteinander verbundenen bogenförmigen federnden Arme auszubilden, die die Rastmittel für den Einsatzkörper bilden. Auch hier kann vorteilhafterweise ein zusätzlicher Sprengring entfallen.

Ferner besteht bei der Erfindung eine vorteilhafte Möglichkeit darin, zwischen der Außenseite des Ventiltellers und der lagesicherbaren Mutter eine Gegenfeder anzuordnen, die der der Vorspannung des Ventiltellers dienenden Feder entgegenwirkt. Durch eine solche Gegenfeder wird erreicht, daß in der "normalen", federbedingten Offenstellung des Ventils der Ventil-Strömungsquerschnitt bei einem Druckanstieg des Strömungsmittels durch eine Bewegung des Ventiltellers gegen die Kraft der Gegenfelder noch vergrößert werden kann. Bei der bevorzugten starren, axial unverschiebbaren und somit stabilen Halterung des Einsatzkörpers wird somit eine Vergrößerung des Strömungsquerschnitts über eine Hubvergrößerung des Ventiltellers eingestellt. Die Gegenfeder kann als Tellerfeder aus Metall oder einem geeigneten Kunststoff oder als insbesondere ringförmiger Körper aus einem gummielastischen Material (sogenannte Gummifeder) ausgebildet sein.

In einer weiteren Ausführungsvariante kann das Rohrbruchventil auch so ausgelegt sein, dass es in der Verschlußstellung eine geringfügige Strömung des Druckmittels zulässt. Konstruktiv wird dies durch (mindestens) einen Drosselkanal des Ventiltellers erreicht. Durch diese Ausgestaltung wird folglich in einem dem Ventil nachgeordneten Leitungsabschnitt der Druck langsam, gedrosselt abgebaut, so dass sich ein angeschlossenes Aggregat langsam in eine Ruhestellung bewegen, z. B. absenken kann. Dies ist beispielsweise bei Gabelstaplern wichtig, um eine gehobene Last langsam abzusenken.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll die Erfindung nun genauer erläutert werden. Dabei zeigen:
- Fig. 1: einen Längsschnitt durch eine erste Ausführung eines erfindungsgemäßen Rohrbruchventils,
- Fig. 2: eine der Fig. 1 entsprechende Darstellung der ersten Ausführung eines erfindungsgemäßen Rohrbruchventils, jedoch in einer vorteilhaften Abwandlung,
- Fig. 3: eine vergrößerte Darstellung eines Ausschnitts aus Fig. 2,
- Fig. 4: eine Draufsicht auf das Einsatzteil der ersten Ausführung eines erfindungsgemäßen Rohrbruchventils,
- Fig. 5: eine Schnittansicht des Einsatzteiles der ersten Ausführung eines erfindungsgemäßen Rohrbruchventils gemäß der Linie V-V in Fig. 4,
- Fig. 6a und 7a, 6b und 7b sowie 6c und 7c: jeweils zwei Ansichten dreier verschiedener Ausführungen eines Einzelteils der wie in Fig. 2 und 3 abgewandelten ersten Ausführung sowie der wie in Fig. 8 abgewandelten zweiten Ausführung eines erfindungsgemäßen Rohrbruchventils,
- Fig. 8: eine der Fig. 3 entsprechende Schnittansicht einer zweiten Ausführung eines erfindungsgemäßen Rohrbruchventils,
- Fig. 9: eine Draufsicht auf das Einsatzteil der zweiten Ausführung eines erfindungsgemäßen Rohrbruchventils,
- Fig. 10: eine Schnittansicht des Einsatzteiles der zweiten Ausführung eines erfindungsgemäßen Rohrbruchventils,
- Fig. 11: eine Seitenansicht des Einsatzteiles der zweiten Ausführung eines erfindungsgemäßen Rohrbruchventils,
- Fig. 12: die Darstellung einer Abwicklung des Einsatzteiles der zweiten Ausführung eines erfindungsgemäßen Rohrbruchventils,
- Fig. 13: eine qualitative diagrammatische Darstellung der Abhängigkeit der Öffnungsweite des Ventils vom Druck des Druckmittels bei der abgewandelten ersten und zweiten Ausführung eines erfindungsgemäßen Rohrbruchventils, wenn sie sich im normalen Betriebszustand befindet,
- Fig. 14: eine qualitative diagrammatische Darstellung der Abhängigkeit der Öffnungsweite des Ventils vom Druck des Druckmittels bei allen dargestellten Ausführungen eines erfindungsgemäßen Rohrbruchventils, für den Fall, daß ein Leitungsbruch eintritt,
- Fig. 15: eine Draufsicht auf das Einsatzteil einer dritten Ausführung eines erfindungsgemäßen Rohrbruchventils,
- Fig. 16: eine Schnittansicht der dritten Ausführung des Einsatzteiles eines erfindungsgemäßen Rohrbruchventils gemäß der Linie XVI-XVI in Fig. 15,
- Fig. 17: einen Längsschnitt durch den Ventilbereich einer weiteren Ausführungsvariante des erfindungsgemäßen Rohrbruchventils,
- Fig. 18: eine Ausschnittvergrößerung aus Fig. 17 im Bereich des Dichtsitzes,
- Fig. 19: eine Draufsicht des Einsatzteils der Ausführung gemäß Fig. 17,
- Fig. 20: einen Schnitt des Einsatzteils gemäß Schnittlinie XX-XX in Fig. 19,
- Fig. 21: eine weitere Ausführung des Rohrbruchventils im Längsschnitt,
- Fig. 22: eine Ausführungsvariante in einer vergrößerten Teilschnittansicht,
- Fig. 23: eine Darstellung analog zu Fig. 22 in einer weiteren Modifikation,
- Fig. 24: eine axiale Stirnansicht in Pfeilrichtung A gemäß Fig. 22, 23,
- Fig. 25: eine weitere Ausführungsform des Rohrbruchventils in einer Darstellung analog Fig. 21 und
- Fig. 26: ein vergrößertes Einzelteil aus Fig. 25 in Seitenansicht und in zwei verschiedenen Varianten in der oberen und unteren Figurenhälfte.

In den verschiedenen Figuren der Zeichnung sind gleiche und einander entsprechende Teile stets mit denselben Bezugszeichen versehen und werden daher in der Regel auch jeweils nur einmal beschrieben.

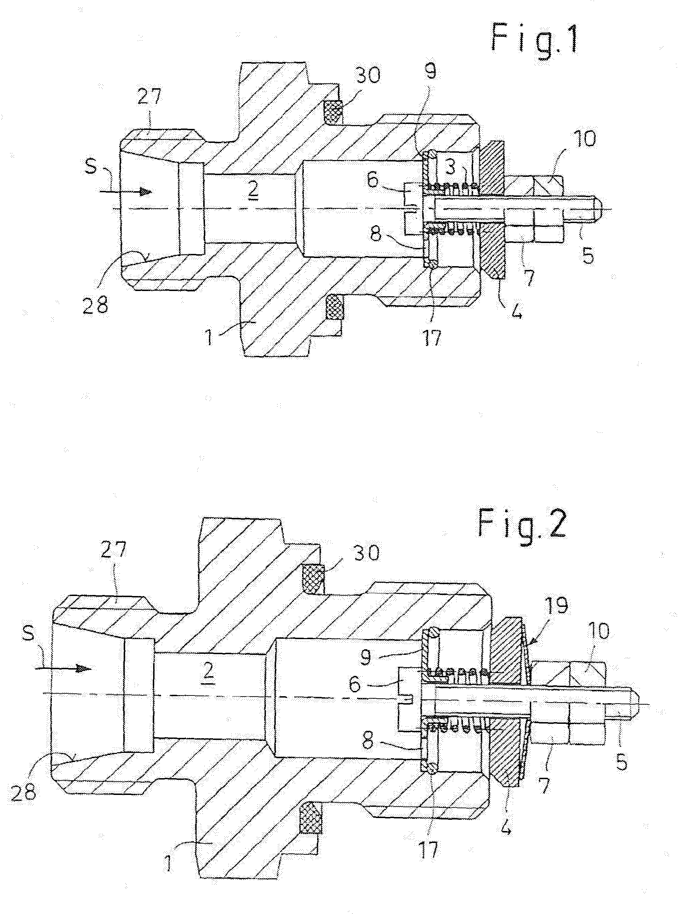

Wie sich zunächst aus Fig. 1 bis 3 ergibt, weist ein erfindungsgemäßes, insbesondere einstellbares, Rohrbruchventil zum Verschluß einer Druckmittelleitung im Schadensfall folgende Teile auf: ein Gehäuse 1, welches einen im wesentlichen zylindrischen Innenraum 2 aufweist, einen von einer Feder 3, insbesondere von einer Schraubenfeder, in eine Offenstellung vorgespannten Ventilteller 4 zum Verschluß des Innenraums 2, einen einstückig ausgebildeten Schaft 5, der einendig einen Kopf 6 und anderendig mindestens ein die Außenseite des Ventiltellers 4 beaufschlagendes Sicherungselement 7 aufweist, und einen im Innenraum 2 angeordneten, Strömungsdurchgänge 8 für das Druckmittel aufweisenden Einsatzkörper 9. Der Ventilteller 4 und der Einsatzkörper 9 werden zentral von dem Schaft 5 durchgriffen, wozu entsprechende, nicht näher bezeichnete Bohrungen bzw. Durchgangsöffnungen vorhanden sind.

Der Kopf 6 ist insbesondere als Einstellkopf in Form einer Schlitzschraube ausgebildet und kann mit dem Sicherungselement 7 derart zusammenwirken, daß die Vorspannung der Feder 3 durch relatives Verdrehen des Einstellkopfes und/oder des Sicherungselementes 7 veränderbar ist.

Bei dem Sicherungselement 7 handelt es sich dazu im Besonderen um eine lagesicherbare Mutter. Die Lagesicherung der Mutter erfolgt mit Vorteil über eine Kontermutter 10; es könnte aber zu diesem Zweck auch anstelle der Mutter eine Sicherungsmutter oder überhaupt ein anderes Sicherungselement 7 verwendet wer den, insbesondere dann, wenn das Ventil nicht mit der bevorzugten Funktion der Einstellbarkeit ausgestattet werden soll.

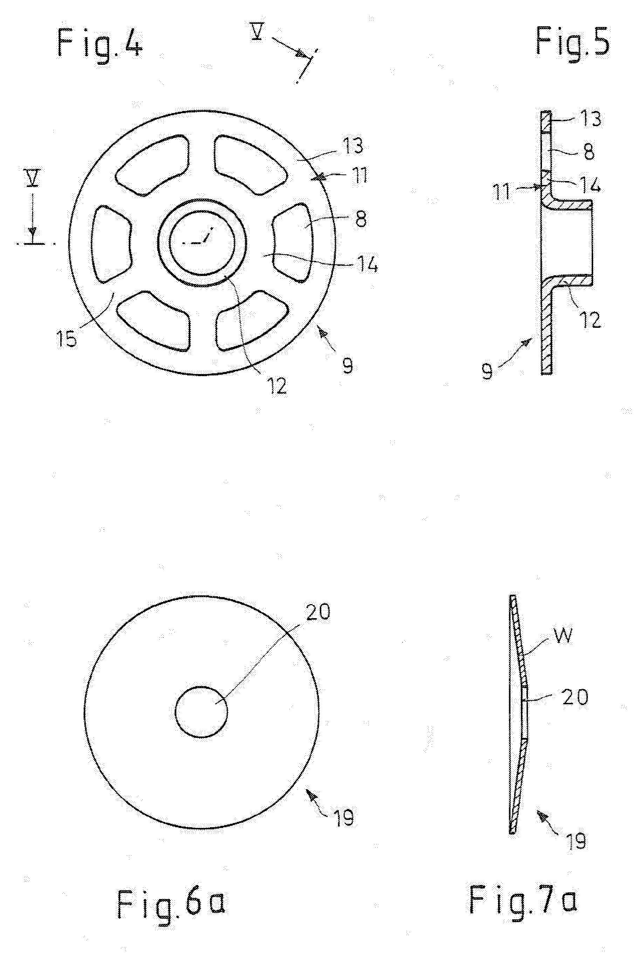

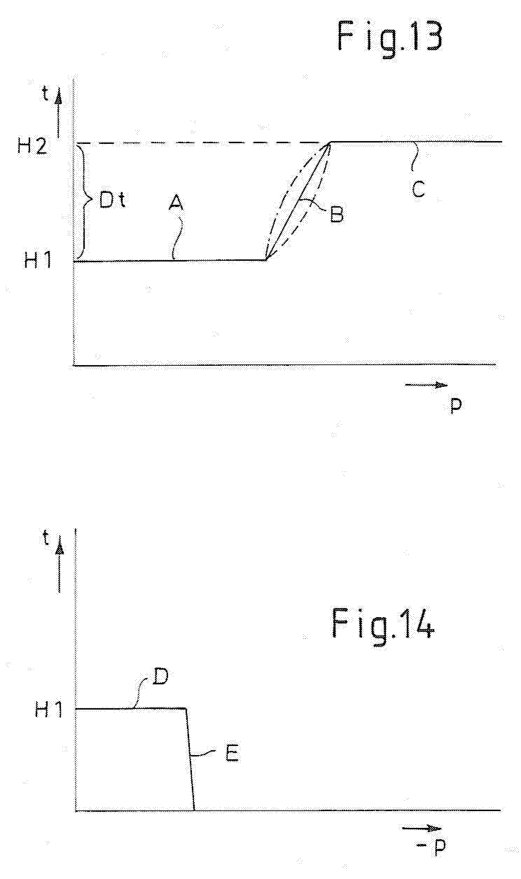

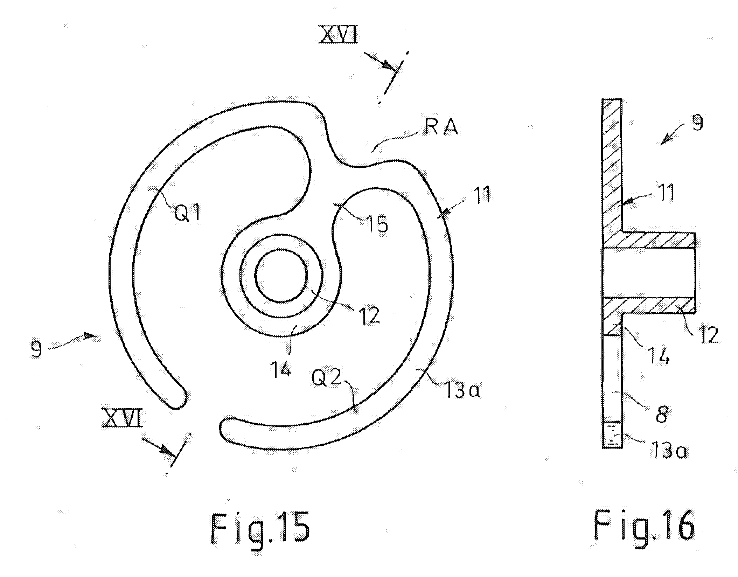

Der Einsatzkörper 9 ist erfindungsgemäß als Blechformteil ausgebildet, wozu Fig. 4 und 5 für die erste Ausführung (und insbesondere Fig. 12 und 15 für die weiteren Ausführungen) weitere Details zu entnehmen sind. Insbesondere ist der Einsatzkörper 9 als Biege-Stanz-Teil ausgebildet, und zwar als ringförmige, Durchbrüche aufweisende Scheibe 11, an die ein im wesentlichen senkrecht von der Scheibenebene abstehender Führungsstutzen 12 für die Schraubenfeder 3 angeformt ist. Die Scheibe 11 bildet ein äußeres, im Innenraum 2 des Gehäuses 1 befestigbares Halteteil des Einsatzkörpers 9, während der Führungsstutzen 12 ein hohlzylindrisches Führungsteil für die Feder 3 bildet. Im Montagezustand übergreift die Schraubenfeder den Führungsstutzen 12 und liegt einseitig auf der Scheibe 11 auf. Anderseitig liegt die Feder 3 an der Innenseite des Ventiltellers 4 an.

Die Durchbrüche in der Scheibe 11 bilden die Strömungsdurchgänge 8 für das Druckmittel. Der Einsatzkörper 9 weist einen äußeren, geschlossenen ringförmigen Randbereich 13 auf. Die sich daran radial nach innen anschließenden Strömungsdurchgänge 8 sind vorzugsweise näherungsweise trapezförmig ausgebildet. Der ringförmige Randbereich 13 (zur Befestigung am Gehäuse 1) ist mit einem inneren Ringbereich 14 (zur Auflage der Feder 3) über beispielsweise sechs speichenartige Stege 15 verbunden. Der Führungsstutzen 12 kann beispielsweise mit Vorteil durch ein Bördeln des inneren Ringbereiches 14 hergestellt sein. Ebenso ist alternativ eine Ausführung des Einsatzkörpers 9 als Spritzgußteil möglich.

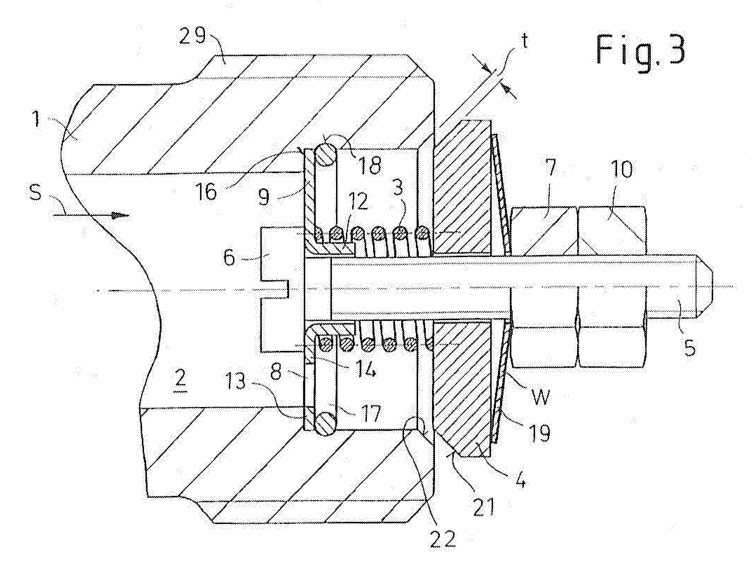

Wie Fig. 1 und 2, aber deutlicher insbesondere Fig. 3, zu entnehmen ist, sind bei dem erfindungsgemäßen Ventil Rastmittel zur Ausbildung einer lösbaren kraft- und/oder formschlüssigen Verbindung des Einsatzkörpers 9 mit korrespondierenden Befestigungsmitteln der Wand des Gehäuseinnenraums 2 vorhanden. Der Einsatzkörper 9 ist im Einbauzustand an einem Absatz 16 des Gehäuseinnenraumes 2 insbesondere in axialer Richtung spielfrei von einem Sprengring 17 gehalten, welcher die Rastmittel für den Einsatzkörper 9 bildet. Die korrespondierenden Befestigungsmittel der Wand des Gehäuseinnenraums 2 sind durch eine Innennut 18 in der Wand gebildet.

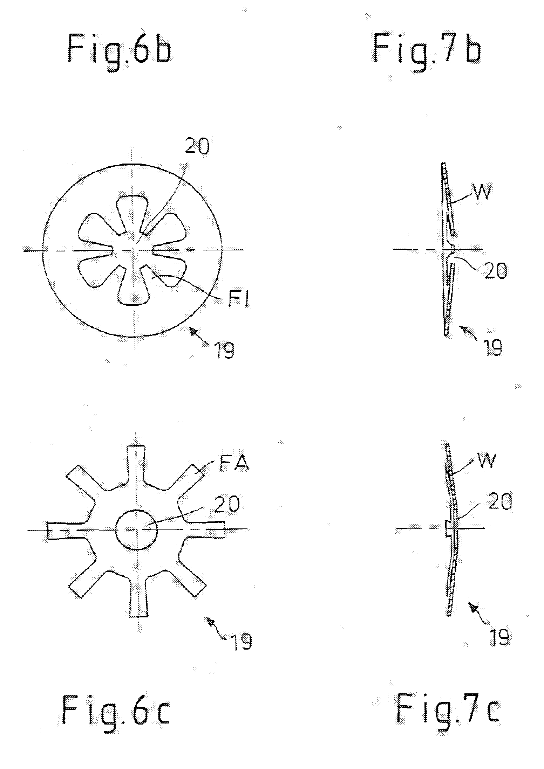

Die in Fig. 2 und 3 dargestellte Modifikation der ersten Ausführung des erfindungsgemäßen Rohrbruchventils unterscheidet sich von der Basisausführung (Fig. 1) dadurch, daß zwischen der Außenseite des Ventiltellers 4 und der lagesicherbaren Mutter 7 eine hier beispielhaft als Tellerfeder ausgebildete Gegenfeder 19 angeordnet ist. Wie aus den Einzeldarstellungen der Tellerfeder 19 (Fig. 6a, 6b, 6c - jeweils Draufsicht, Fig. 7a, 7b, 7c jeweils Schnittansicht) zu entnehmen ist, besitzt die Tellerfeder 19 entweder einen an sich bekannten Aufbau als gewölbte ringförmige Scheibe mit einer zentrischen, an den Durchmesser des Schaftes 5 angepaßten Bohrung 20 (Fig. 6a, 7a) oder kann im Innenbereich (Fig. 6b, 7b) oder im Außenbereich (Fig. 6c, 7c) durch zusätzlich aus der Scheibe ausgenommene Bereiche derart ausgebildet sein, daß innere Federbeine FI oder äußere Federbeine FA entstehen. Die Gegenfeder 19 ist im Einbauzustand dabei derart angeordnet, daß sie der der Vorspannung dienenden Feder 3 entgegenwirkt, d.h., daß im Falle der Tellerfeder deren Wölbung W auf das Sicherungselement 7 hin gerichtet ist.

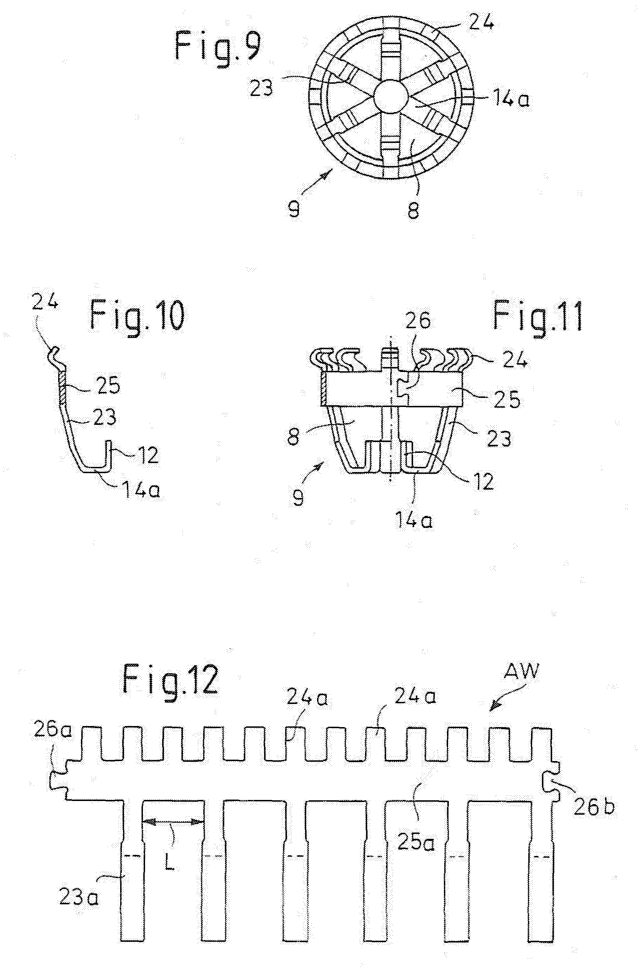

Wie bereits erwähnt, wird durch die Gegenfeder 19 erreicht, daß in der Offenstellung des Ventils der Ventilquerschnitt bei einem Druckanstieg des Strömungsmittels vergrößert werden kann. Die Vergrößerung des Strömungsquerschnitts wird über eine Vergrößerung des Hubes t des Ventiltellers 4 eingestellt (Fig. 3). Hierzu ist noch zu ergänzen, daß der Ventilteller 4 in einer Verschlußstellung mit einem insbesondere konischen Umfangsrand 21 an einem korrespondierenden Dichtsitz 22 des Gehäuses 1 anliegt. Als Hub des Ventiltellers 4 wird der maximale Abstand t des Randes 21 des Ventiltellers 4 von dem Dichtsitz 22 bezeichnet. Bei den Ausführungen gemäß Fig. 1 bis 16 ist der Dichtsitz 22 als Innenkonusfläche gebildet. Indem beide Konen mit gleichem Konuswinkel ausgebildet werden, kann eine flächige Dichtanlage erreicht werden.

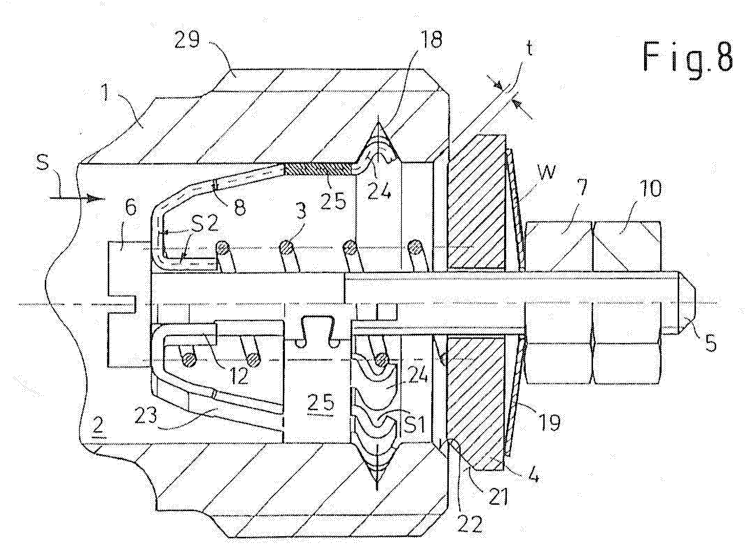

Die Wirkungsweise eines erfindungsgemäßen Ventils mit Gegenfeder 19 wird durch Fig. 13 veranschaulicht. Das Diagramm zeigt dabei die Abhängigkeit des Hubes t des Ventiltellers 4 vom Druck p des Druckmittels im normalen Betriebszustand, d.h., wenn das Druckmittel in der in den Fig. 1 bis 3 (sowie Fig. 8) mit dem Bezugszeichen S bezeichneten Strömungsrichtung fließt. In einem ersten Druckbereich A bleibt der Hub t des Ventiltellers 4 mit steigendem Druck p auf einem bestimmten voreingestellten Wert H1 konstant. Ist dann ein bestimmter Grenzwert des Druckes erreicht, beginnt die Gegenfeder 19 sich elastisch zu verformen, wobei der Ventilteller 4 unter der Wirkung des Druckmittels gegen die Vorspannkraft der Gegenfeder 19 nach außen gedrückt wird (Bereich B), bis eine Endstellung mit einem Maximalhub H2 des Ventiltellers 4 erreicht ist (Bereich C). Die Größe und Dynamik der dabei auftretenden Hubvergrößerung Dt wird von der Federkennlinie der Gegenfeder 19 bestimmt. Die Federkennlinie kann eine lineare Charakteristik (Vollinie) oder eine nichtlineare Charakteristik (strichpunktierte Linie: positiv degressiver Anstieg, Strichlinie: positiv progessiver Anstieg) aufweisen. Die Gegenfeder 19 kann bevorzugt (entsprechend einer gewünschten Hubvergrößerung Dt) einen Hub im Bereich von 0,1 bis 5 mm, vorzugsweise von 0,5 mm aufweisen.

Die Darstellung in Fig. 14, die zur Veranschaulichung der Wirkungsweise des Ventils bei Auftreten eines Schadensfalles einer dem erfindungsgemäßen Ventil vorgeordneten Druckmittelleitung dient, zeigt die Abhängigkeit der Öffnungsweite t des Ventils vom Druck "-p" des Druckmittels. (Das negative Vorzeichen ist dabei darauf zurückzuführen, daß im Schadensfall das Druckmittel das Bestreben hat, entgegen der in der in den Fig. 1 bis 3 (sowie Fig. 8) mit dem Bezugszeichen S bezeichneten Strömungsrichtung zu fließen, und daß der Druck somit in die Richtung "-S" wirkt. Die Darstellung in Fig. 14 ist dabei charakteristisch für alle beschriebenen Ausführungen des erfindungsgemäßen Rohrbruchventils. Es wird deutlich, daß bis zum Erreichen einer über den Einstellkopf von der Vorspannung der Feder 3 bestimmten, voreinstellbaren Ansprechdruckdifferenz (Bereich E) der Hub t des Ventiltellers 4 auf dem voreingestellten Wert H1 konstant bleibt. Ist die Ansprechdruckdifferenz erreicht, schließt das Ventil (Bereich E), d.h. der Hub t des Ventiltellers 4 geht auf den Wert Null zurück. In einer dem erfindungsgemäßen Ventil nachgeordneten Druckmittelleitung bleibt der Druck dabei nahezu konstant und ein Herausfließen des Druckmittels wird unterbunden.

Gemäß der zweiten Ausführung der Erfindung (Fig. 8 bis 12) ist der Einsatzkörper 9 als ein Korbarme 23 (insbesondere federelastische Korbarme) aufweisender Korb ausgebildet, an den wiederum ein in Längsrichtung des Gehäuses 1 verlaufender Führungsstutzen 12 für die Schraubenfeder angeformt ist. Der Korb bildet in diesem Fall das äußere, im Innenraum 2 des Gehäuses 1 befestigbare Halteteil und der Führungsstutzen 12 wiederum das hohlzylindrische Führungsteil (- das auch als Halteteil bezeichnet werden könnte -) für die Feder 3.

Fig. 8 zeigt dabei bereits eine durch das Vorhandensein der Gegenfeder 19 modifizierte Ausbildung, wobei selbstverständlich auch eine Ausführung ohne die Gegenfeder 19 möglich ist.

Die Rastmittel für den Einsatzkörper 9 sind in der zweiten Ausführung des erfindungsgemäßen Ventils durch eine (radialeleastisch komprimierbare bzw. aufweitbare) Schlitze S1 aufweisende Randwulst 24 des Einsatzkörpers 9 gebildet. Die korrespondierenden Befestigungsmittel der Wand des Gehäuseinnenraums 2 sind - wie bei der ersten Ausführung - durch eine Innennut 18 in der Wand des Gehäuses 1 gebildet. Ein Sprengring 17 und ein Absatz 16 zur Anlage des Einsatzkörpers 9 können entfallen.

Die Wand des Gehäuseinnenraums 2 weist somit im Bereich zwischen dem Einstellkopf 6 des Schaftes 5 und der Innenseite des Ventiltellers 4 (in einer Position in der sie sich bei Vorliegen des Schließzustandes des Ventils befindet) eine lediglich zweistufige Durchmesserausbildung auf - einen Grunddurchmesser, der etwa dem Außendurchmesser des Einsatzkörpers 9 entspricht, und einen Durchmesser der (Ring-)Innennut 18, der an den Außendurchmesser der Randwulst 24 angepaßt ist. (Bei der ersten Ausführung liegt demgegenüber eine dreistufige Durchmesserausbildung vor.)

Wie die Abwicklung AW in Fig. 12 veranschaulicht, kann der Einsatzkörper 9 in herstellungstechnisch einfacher Weise als Biege-Stanz-Teil gefertigt werden, wobei die Abwicklung AW den Korbarmen 23 entsprechende Lappen 23a, der geschlitzten Randwulst 24 entsprechende Lappen 24a und einen einem umlaufenden ringförmigen Verbindungsabschnitt 25 entsprechenden Steg 25a zeigt.

Zur Bildung eines geschlossenen ringförmigen Verbindungsabschnittes 25 (Verschluß 26 in Fig. 11) aus diesem Steg 25a sind an den Stegenden kraft- und/oder formschlüssig zusammenwirkende Verschlußmittel (Lappen 26a, Aussparung 26b) angeordnet bzw. ausgebildet.

Sowohl der (bei dieser Ausführung geschlitzte) Führungsstutzen 12 als auch ein ringförmiger, jedoch durch Schlitze S2 unterbrochener Bodenbereich 14a zur Anlage der Feder 3, der dem inneren Ringbereich 14 der Scheibe 11 bei der ersten Ausführung entspricht, werden ebenfalls aus den Lappen 23a für die Korbarme 23 durch entsprechende Umbiegungen der Enden der Lappen 23a gebildet. Ein gegenseitiger Abstand L zwischen den Lappen 23a legt dabei jeweils den Abstand zwischen benachbarten Korbarmen 23 und die Weite eines jeweils durch den Bodenbereich 14a und den Führungsstutzen 12 verlaufenden gemeinsamen Schlitzes S2 fest. Die Strömungsdurchgänge 8 sind bei der zweiten Ausführung der Erfindung durch die gegenüber dem Abstand L zwischen den Lappen 23a durch das Biegen aufgeweiteten Zwischenräume zwischen den Korbarmen 23 gebildet und die Schlitze S2 im Bodenbereich 14a und im Führungsstutzen 12 gebildet.

Bei der zweiten und auch bei der dritten Ausführungsform der Erfindung ist es vorteilhafterweise möglich, daß der von der Feder 3 in Offenstellung vorgespannte Ventilteller 4, der Schaft 5 mit seinem Kopf 6 und mit der anderendig angeordneten Sicherungselement 7 sowie der Einsatzkörper 9 und gegebenenfalls die Tellerfeder 19 eine vormontierte Baueinheit bilden, die durch einfaches Stecken und Verclipsen im Gehäuse 1 montiert werden kann.

Zur Gesamtmontage des erfindungsgemäßen Ventils ist ergänzend zu bemerken, daß - in an sich bekannter Weise - das dem Ventilteller 4 abgekehrte Ende des Gehäuses 1 mit einem Außengewindeabschnitt 27 und einem Innenkonus 28 (Fig. 1 und 2) zum Eingriff eines konischen Schneidringes versehen sein kann, der ein Anschlußrohr umgibt und von einer auf dem Außengewindeabschnitt 27 aufgeschraubten Mutter in Eingriff mit dem Innenkonus 28 gehalten wird.

Des weiteren kann das dem Ventilteller 4 zugekehrte Ende des Gehäuses 1 in an sich bekannter Weise für die Verschraubung mit dem dem Ventil nachgeordneten Teil einer Rohrleitung ausgebildet sein und dazu insbesondere einen Außengewindeabschnitt 29 aufweisen. Auch kann für die Verschraubung eine geeignete Abdichtung vorgesehen sein (Dichtungsring 30).

Was die Anschlußmaße (insbesondere Außendurchmesser) des erfindungsgemäßen Ventils für die Druckmittelleitung betrifft, so können diese vorteilhafterweise entsprechend den geltenden Normen gewählt werden.

Die dritte Ausführung kommt der ersten Ausführung der Erfindung sehr nahe, insofern der Einsatzkörper 9 wiederum als Blechformteil oder Spritzgußteil ausgebildet sein kann. Wie außerdem ein Vergleich mit Fig. 4 und 5 zeigt, ist der Einsatzkörper 9 wiederum als Scheibe 11 ausgebildet, an die ein im wesentlichen senkrecht von der Scheibenebene abstehender Führungsstutzen 12 für die Schraubenfeder 3 angeformt ist. Die Scheibe 11 bildet wiederum ein äußeres, im Innenraum 2 des Gehäuses 1 befestigbares Halteteil des Einsatzkörpers 9, während der Führungsstutzen 12 ein hohlzylindrisches Führungsteil für die Feder 3 bildet, wie dies auch bei der ersten Ausführung der Erfindung der Fall ist. Im Montagezustand umgreift die Schraubenfeder den Führungsstutzen 12 und liegt einseitig auf der Scheibe 11 auf.

Des weiteren weist der Einsatzkörper 9 (wie bei der ersten Ausführung) einen äußeren Randbereich 13a zur Befestigung am Gehäuse 1 auf, dieser ist aber im Gegensatz zur ersten Ausführung nicht geschlossen, sondern durch zwei bogenförmige federnde Arme Q1, Q2 gebildet, die im Bereich eines Steges 15 zwischen dem äußeren Randbereich 13a und dem wiederum vorhandenen inneren Ringbereich 14 zusammenlaufen bzw. verbunden sind. Im Sinne einer Erhöhung der Federwirkung der Arme Q1, Q2 kann an der Verbindungsstelle eine Randausnehmung RA vorgesehen sein, wie dies Fig. 15 zu entnehmen ist. Die von den Armen Q1, Q2 umfaßten, sich daran radial nach innen anschließenden Strömungsdurchgänge 8 sind bei dieser Ausführung optimal groß, da im wesentlichen nur ein Steg 15 den Ventilquerschnitt einengt.

Die beiden bogenförmigen federnden Arme Q1, Q2 bilden in diesem Fall das äußere am Gehäuse 1 befestigbare Halteteil, indem sie Rastmittel darstellen, die nach der Art eines Federringes mit einer Innennut 18 in der Wand des Gehäuses (als korrespondierendem Befestigungsmittel) kraft- und formschlüssig verbunden, insbesondere verclipst, werden können. Ein zusätzlicher Federring 17 ist somit - wie bei der zweiten Ausführung der Erfindung - nicht erforderlich. Ebenso braucht die Wand des Gehäuseinnenraums 2 vorteilhafterweise - wie bei der zweiten Ausführung - im Bereich zwischen dem Kopf 6 des Schaftes 5 und der Innenseite des Ventiltellers 4 eine nur zweistufige Durchmesserausbildung aufzuweisen.

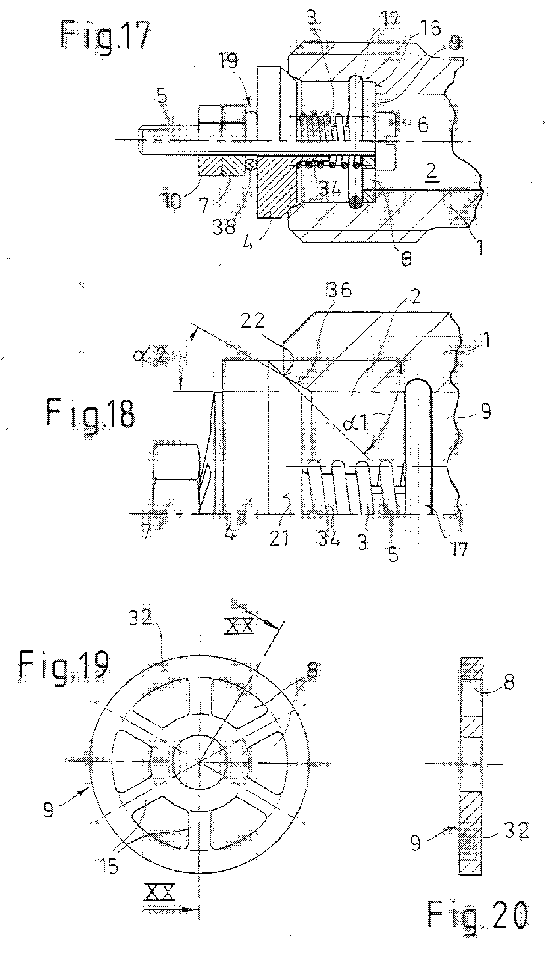

Anhand der Fig. 17 bis 26 sollen noch einige Ausführungsvarianten und vorteilhafte Ausgestaltungsmerkmale erläutert werden.

Zunächst ist bei diesen Ausführungen vorgesehen, dass der Einsatzkörper 9 als scheibenförmiges, ebenes Blechformteil ausgebildet ist, indem er durch einen einfachen Stanzvorgang geformt ist. Gemäß Fig. 19 und 20 entspricht diese Ausführung als Scheibenteil 32 bzgl. der Strömungsdurchgänge 8 und der Stege 15 im Wesentlichen der Ausführung gemäß Fig. 4. Es entfällt hier lediglich der Führungsstutzen 12. Deshalb ist es bei dieser Ausführung des Einsatzkörpers vorteilhaft, wenn der Ventilteller 4 auf seiner dem Einsatzkörper 9 zugewandten Seite einen zentrischen, im Wesentlichen hohlzylindrischen Führungsansatz 34 für die Feder 3 aufweist.

Wie am Besten in der vergrößerten Darstellung in Fig. 18 zu erkennen ist, ist hierbei der gehäuseseitige Dichtsitz 22 als Kante ausgebildet. Der konische Umfangsrand 21 des Ventiltellers 4 kommt somit in der Verschlußstellung mit Linienkontakt zur Anlage an den Dichtsitz 22. Im Anschluß an den Dichtsitz 22 kann - wie dargestellt - ein Innenkonus 36 vorgesehen sein, wodurch in der Öffnungsstellung günstige Strömungseigenschaften erreicht werden können. Der konische Umfangsrand 21 des Ventiltellers 4 schließt mit der Längsachse einen ersten Konuswinkel α1 ein, und der Innenkonus 36 ist in einem zweiten Konuswinkel α2 ausgerichtet, wobei der erste Konuswinkel α1 größer als der zweite Konuswinkel α2 ist um in der Verschlußstellung den beschriebenen Linienkontakt zu gewährleisten. Vorzugsweise liegt der erste Konuswinkel α1 in der Größenordnung von etwa 45°, und der zweite Konuswinkel α2 beträgt etwa 30°.

Weiterhin ist bei der Ausführung gemäß Fig. 17 vorgesehen, dass die Gegenfeder 19 von einem ringförmigen Körper 38 aus einem gummielastischen Material gebildet ist (sogenannte Gummifeder). Es kann beispielsweise ein üblicher O-Ring in einer geeigneten Dimension verwendet werden.

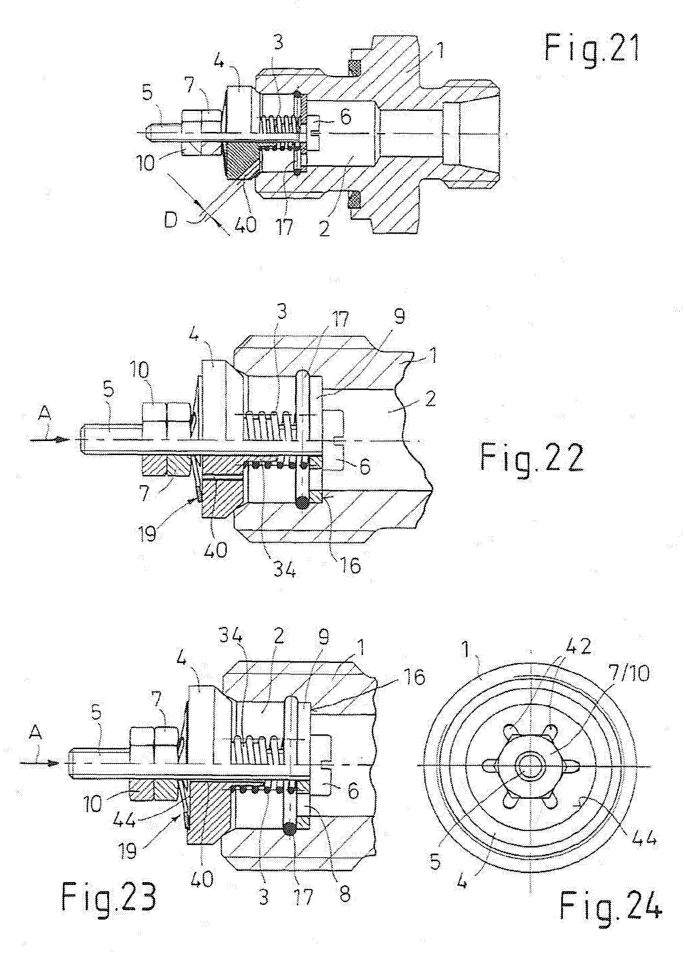

Bei den Ausführungen gemäß Fig. 21 bis 24 weist das erfindungsgemäße Rohrbruchventil mindestens einen Drosselkanal 40 derart auf, dass in der Verschlußstellung zum Druckabbau eine geringfügige Druckmittelströmung möglich ist. Die Hintergründe dieser Ausgestaltung wurden oben bereits erläutert. Bei der Ausführung gemäß Fig. 21 erstreckt sich der Drosselkanal 40 als schräge Bohrung durch den Ventilteller 4, und zwar ausgehend von der dem Innenraum 2 des Gehäuses 1 zugewandten Seite bis zur äußeren Umfangsfläche. Dadurch mündet der Drosselkanal 40 radial nach außen außerhalb des bevorzugt von der als Gegenfeder 19 vorgesehenen Tellerfeder überdeckten Flächenbereichs. Daher kann hierbei eine durchgehende, nicht unterbrochende Tellerfeder eingesetzt werden. Der Drosselkanal 40 weist einen Durchmesser D im Bereich von vorzugsweise etwa 1 mm auf.

Bei der Variante gemäß Fig. 22 ist der Drosselkanal 40 als eine axiale Bohrung ausgebildet, die deshalb in dem von der Tellerfeder überdeckten Flächenbereich nach außen mündet. Deshalb muß hier die Tellerfeder- ähnlich der Ausführung gemäß Fig. 6 b und 7 b - geschlitzt sein, um gemäß Fig. 24 Strömungsöffnungen 42 zu bilden.

Bei der weiteren Variante gemäß Fig. 23 ist der Drosselkanal 40 dadurch gebildet, dass der Ventilteller 4 eine zentrische Bohrung mit einem derart größeren Durchmesser aufweist, dass zu dem Schaft 5 hin ein Ringspalt gebildet ist. Wenn auch hierbei als Gegenfeder 19 eine Tellerfeder eingesetzt wird, muß diese entsprechend Fig. 22 und 24 geschlitzt ausgebildet sein. Außerdem ist dann vorgesehen, dass die Tellerfeder spielfrei in einer flächigen Vertiefung 44 des Ventiltellers 4 sitzt, um ein - durch den Ringspalt bzw. Drosselkanal 40 grundsätzlich mögliches - Verkippen des Ventiltellers 4 zu vermeiden.

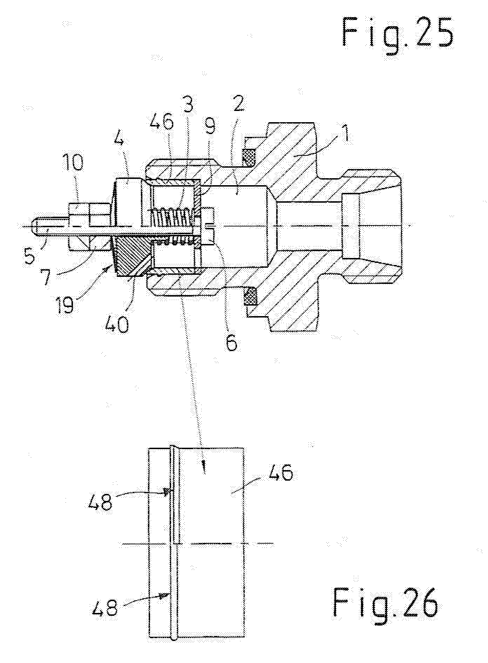

Was noch die Ausführung gemäß Fig. 25 und 26 betrifft, so ist dabei eine vormontierte Ventileinheit als sogenannte Ventilpatrone (Cartridge) vorgesehen. Diese Baueinheit besteht aus dem Ventilteller 4, dem Schaft 5 mit seinem Kopf 6, dem Sicherungselement 7 (Mutter mit Gegenmutter 10), dem Einsatzkörper 9 und der vorgespannten Feder 3. Vorzugsweise ist zudem die Gegenfeder 19 vorgesehen. Weiterhin ist hier eine Einsatzhülse 46 als Bestandteil der vormontierten Baueinheit vorgesehen. Diese Einsatzhülse 46 ist im äußeren Umfangsbereich zwischen dem Einsatzkörper 9 und dem Ventilteller 4 angeordnet. Dabei ist sie derart fixiert in das Gehäuse 1 eingesetzt oder einsetzbar, dass sie den Einsatzkörper 9 axial spielfrei zwischen sich und dem oben schon beschriebenen Absatz 16 im Gehäuse 1 festlegt. Somit ist hier ein zusätzlicher Sprengring 17 nicht erforderlich. Hierbei ist es von besonderem Vorteil, wenn die Einsatzhülse 46 den mit dem Ventilteller 4 zusammenwirkenden Dichtsitz 22 aufweist. Auf diese Weise kann die vormontierte Baugruppe fertig voreingestellt werden, was das Öffnungs- und Schließverhalten und den Öffnungsquerschnitt des Ventils betrifft. Diese Einstellung ist vorteilhafterweise unabhängig von eventuellen Fertigungstoleranzen im Bereich des Gehäuses 1. Gemäß Fig. 26 weist die Einsatzhülse 46 auf ihrem Außenumfang Rastmittel 48 auf, die mit korrespondierenden Gegenrastmitteln im Gehäuse 1 zusammenwirken. Bei den Rastmitteln 48 handelt es sich bevorzugt um einen radialen Ringansatz, der in eine korrespondierende nutartige Ausnehmung im Gehäuse eingreift. Dieser Ringansatz kann gemäß Fig. 26, obere Hälfte einen nasen- bzw. zahnartigen Querschnitt oder gemäß Fig. 26, untere Hälfte einen gewölbten, beispielsweise etwa halbkreisförmigen Querschnitt aufweisen. Dazu kann die Einsatzhülse 46 mit Vorteil aus einem Material bestehen, das härter als das Material des Gehäuses 1 ist. Beispielsweise kann es sich um gehärteten Stahl handeln. Dadurch kann eine hohe Sicherheit bezüglich der Halterung im Gehäuse 1 erreicht werden. Die beschreibende Ausgestaltung bewirkt zudem gleichzeitig auch eine Abdichtung der Einsatzhülse 46 im Gehäuse 1. Zur Montage braucht die Baugruppe lediglich axial in das Gehäuse 1 eingesetzt zu werden.

Die Erfindung ist nicht auf die dargestellten Ausführungsbeispiele beschränkt, sondern umfaßt auch alle im Sinne der Erfindung gleichwirkenden Ausführungen. Insbesondere sind auch andere Ausführungen der Feder 3, insofern diese als Druckfederelement (z.B. aus Gummi) ausgebildet ist, oder des Einsatzkörpers 9 möglich.

Ferner ist die Erfindung nicht auf die im Anspruch 1 definierte Merkmalskombination beschränkt, sondern kann auch durch jede beliebige andere Kombination von Merkmalen aller insgesamt offenbarten Einzelmerkmale definiert sein. Dies bedeutet, daß grundsätzlich jedes Einzelmerkmal des Anspruchs 1 weggelassen bzw. durch mindestens ein an anderer Stelle der Anmeldung offenbartes Merkmal ersetzt werden kann. Insofern ist der Anspruch 1 lediglich als ein erster Formulierungsversuch für eine Erfindung zu verstehen.

### Bezugszeichen

- 1: Gehäuse
- 2: Innenraum von 1
- 3: Feder
- 4: Ventilteller
- 5: Schaft
- 6: Einstellkopf an 5
- 7: Mutter auf 5
- 8: Strömungsdurchgang
- 9: Einsatzkörper
- 10: Kontermutter für 7
- 11: Auflagebereich von 9 für 3 (Scheibe oder Boden)
- 12: Führungsstutzen von 9 für 3
- 13, 13a: Randbereich von 9
- 14: innerer Ringbereich von 9
- 14a: Bodenbereich von 9
- 15: Steg zwischen 13 und 14
- 16: Absatz i n 2
- 17: Sprengring
- 18: Innennut in 1
- 19: Gegenfeder
- 20: Bohrung in 19
- 21: Umfangsrand von 4
- 22: Dichtsitz von 1/46
- 23: Korbarm von 9
- 23a: Lappen zur Bildung von 23 und 12
- 24: Randwulst von 9
- 24a: Lappen zur Bildung von 24
- 25: Verbindungsabschnitt von 9
- 25a: Steg zur Bildung von 25
- 26: Verschluß von 25
- 26a: Lappen an 25a (Verschlußmittel von 26)
- 26b: Aussparung in 25a (Verschlußmittel von 26)
- 27: Außengewindeabschnitt von 1 (4 abgewandt)
- 28: Innenkonus von 1
- 29: Außengewindeabschnitt von 1 (4 zugewandt)
- 30: Dichtungsring
- 32: Scheibenteil (=9)
- 34: Führungsansatz (für 3 an 4)
- 36: Innenkonus
- 38: Körper (=19)
- 40: Drosselkanal
- 42: Öffnungen
- 44: Vertiefung
- 46: Einsatzhülse
- 48: Rastmittel

- A, B, C, D, E: Druckbereiche
- AW: Abwicklung von 9
- Dt: Hubvergrößerung
- FI: inneres Federbein von 19
- FA: äußeres Federbein von 19
- H1: unterer Wert von t im Betriebszustand
- H2: oberer Wert von t im Betriebszustand
- L: gegenseitiger Abstand von 23a
- RA: Randausnehmung in 13a
- S1: Schlitz in 24
- S2: Schlitz in 14a, 12
- p: Druck
- Q1, Q2: elastische Arme in 13a
- S: Strömungsrichtung
- t: Hub von 4
- W: Wölbung von 19

## Patentansprüche

1. Rohrbruchventil zum Verschluß einer Druckmittelleitung im Schadensfall, umfassend
- ein Gehäuse (1), welches einen Innenraum (2) aufweist,
- einen von einer Feder (3) in eine Offenstellung vorgespannten Ventilteller (4) zum Verschluß des Innenraums (2), wobei der Ventilteller (4) in einer Verschlußstellung mit einem Umfangsrand (21) an einem korrespondierenden Dichtsitz (22) anliegt,
- einen Schaft (5), der einendig einen Kopf (6) zur Anlage der Feder (3) und anderendig mindestens ein die Außenseite des Ventiltellers (4) beaufschlagendes Sicherungselement aufweist,
- einen im Innenraum (2) angeordneten, Strömungsdurchgänge (8) für das Druckmittel aufweisenden Einsatzkörper (9),
wobei der Ventilteller (4) und der Einsatzkörper (9) zentral von dem Schaft (5) durchgriffen werden,
**dadurch gekennzeichnet, dass** die Feder (3) als Druckfederelement, insbesondere als Schraubenfeder, ausgebildet ist, wobei der Einsatzkörper (9) als durch Ausstanzen geformtes, ebenes, gelochtes, Scheibenteil (32) ausgebildet ist, und wobei der Ventilteller (4) auf seiner dem Einsatzkörper (9) zugewandten Seite einen zentrischen, im Wesentlichen hohlzylindrischen Führungsansatz (34) für die Feder (3) aufweist.

2. Rohrbruchventil nach Anspruch 1,
**dadurch gekennzeichnet,dass** der Einsatzkörper (9) als Biege-Stanz-Teil ausgebildet ist.

3. Rohrbruchventil nach einem der Ansprüche 1 oder 2,
**dadurch gekennzeichnet,dass** der Schaft (5) einstückig ausgebildet ist.

4. Rohrbruchventil nach einem der Ansprüche 1 bis 3,
**dadurch gekennzeichnet, dass** das Sicherungselement (7) als lagesicherbare Mutter ausgebildet ist.

5. Rohrbruchventil nach einem der Ansprüche 1 bis 4,
**dadurch gekennzeichnet,dass** der Kopf (6) als Einstellkopf ausgebildet ist und mit dem Sicherungselement (7) derart zusammenwirkt, daß die Vorspannung der Feder (3) durch relatives Verdrehen des Sicherungselementes (7) und/oder des Einstellkopfes veränderbar ist.

6. Rohrbruchventil nach Anspruch 1,
**dadurch gekennzeichnet,dass** zwischen der Außenseite des Ventiltellers (4) und dem Sicherungselement (7) eine Gegenfeder (19) angeordnet ist, die der der Vorspannung des Ventiltelllers (4) dienenden Feder (3) entgegenwirkt.

7. Rohrbruchventil nach Anspruch 6,
**dadurch gekennzeichnet, dass** dieGegenfeder(19)als Tellerfeder oder als Körper (38) aus einem gummielastischen Material ausgebildet ist.

8. Rohrbruchventil nach Anspruch 6 oder 7,
**dadurch gekennzeichnet,dass** die Gegenfeder (19) einen Federhub im Bereich von 0,1 bis 5 mm, vorzugsweise von 0,5 mm, aufweist.

9. Rohrbruchventil nach einem der Ansprüche 1 bis 8,
**gekennzeichnet durch** Rastmittel (17, 24, Q1, Q2) zur Ausbildung einer lösbaren kraft- und formschlüssigen Verbindung des Einsatzkörpers (9) mit korrespondierenden Befestigungsmitteln (18) der Wand des Innenraums (2) des Gehäuses (1).

10. Rohrbruchventil nach einem der Ansprüche 1 bis 9,
**dadurch gekennzeichnet,dass** der Einsatzkörper (9) durch eine/die lösbare kraft- und formschlüssige Verbindung im Wesentlichen axial spielfrei im Innenraum (2) des Gehäuses (1) festlegbar ist.

11. Rohrbruchventil nach Anspruch 9 oder 10,
**dadurch gekennzeichnet,dass** die korrespondierenden Befestigungsmittel (18) der Wand des Gehäuses (1) durch eine Innennut (18) in der Wand des Gehäuses (1) gebildet sind.

12. Rohrbruchventil nach einem der Ansprüche 9 bis 11,
**dadurch gekennzeichnet,dass** die Rastmittel (17, 24, Q1, Q2) für den Einsatzkörper (9) durch eine Schlitze (S1) aufweisende Randwulst (24) des Einsatzkörpers (9) gebildet sind, die insbesondere auch das Halteteil (13, 13a, 24) bildet.

13. Rohrbruchventil nach einem der Ansprüche 9 bis 11,
**dadurch gekennzeichnet,dass** die Rastmittel (17, 24, Q1, Q2) für den Einsatzkörper (9) durch zwei in einem, insbesondere das Halteteil (13, 13a, 24) bildenden, Randbereich (13a) des Einsatzkörpers (9) angeordnete, einendig miteinander verbundene bogenförmige federnde Arme (Q1, Q2) gebildet sind.

14. Rohrbruchventil nach einem oder mehreren der Ansprüche 1 bis 10,
**dadurch gekennzeichnet, daß** der Einsatzkörper (9) an einem Absatz (16) des Innenraumes (2) des Gehäuses (1) von einem Sprengring (17) gehalten ist, der insbesondere die Rastmittel für den Einsatzkörper (9) bildet.

15. Rohrbruchventil nach einem der Ansprüche 1 bis 14,
**dadurch gekennzeichnet,dass** die Wand des Innenraums (2) des Gehäuses (1) im Bereich zwischen dem Einstellkopf (6) des Schaftes (5) und der Innenseite des Ventiltellers (4) in einem Schließzustand des Ventils eine zweistufige Durchmesserausbildung aufweist.

16. Rohrbruchventil nach einem der Ansprüche 1 bis 15,
**dadurch gekennzeichnet,dass** der von der Feder (3) in Offenstellung vorgespannte Ventilteller (4), der Schaft (5) mit seinem Kopf (6) und dem Sicherungselement (7) sowie der Einsatzkörper (9) und gegebenenfalls die Gegenfeder (19) eine vormontierte Baueinheit bilden.

17. Rohrbruchventil nach Anspruch 16,
**gekennzeichnet durch** eine einen Teil der vormontierten Baueinheit bildende Einsatzhülse (46), die im äußeren Umfangsbereich zwischen dem Einsatzkörper (9) und dem Ventilteller (4) angeordnet ist, und die derart fixiert in das Gehäuse (1) einsetzbar oder eingesetzt ist, dass sie den Einsatzkörper (9) axial zwischen sich und einem Absatz (16) im Gehäuse (1) festlegt.

18. Rohrbruchventil nach Anspruch 17,
**dadurch gekennzeichnet, dass** dieEinsatzhülse(46)denmit dem Ventilteller (4) zusammenwirkenden Dichtsitz (22) aufweist.

19. Rohrbruchventil nach Anspruch 17 oder 18,
**dadurch gekennzeichnet, dass** dieEinsatzhülse(46)aufihrem Außenumfang Rastmittel (48) aufweist, die mit korrespondierenden Gegenrastmitteln im Gehäuse (1) zusammenwirken.

20. Rohrbruchventil nach einem der Ansprüche 1 bis 19,
**gekennzeichnet durch** mindestens einen in der Verschlußstellung des Ventiltellers (4) eine geringfügige Druckabbau-Strömung des Druckmittels zulassenden Drosselkanal (40).

21. Rohrbruchventil nach einem der Ansprüche 1 bis 20,
**dadurch gekennzeichnet,dass** das von dem Ventilteller (4) abgekehrte Ende des Gehäuses (1) mit einem Außengewindeabschnitt (27) und einem Innenkonus (28) zum Eingriff eines konischen Schneidringes versehen ist, der ein Anschlußrohr umgibt und von einer auf dem Außengewindeabschnitt (27) aufgeschraubten Mutter in Eingriff mit dem Innenkonus (28) gehalten wird.

22. Rohrbruchventil nach einem der Ansprüche 1 bis 21,
**dadurch gekennzeichnet,dass** das dem Ventilteller (4) zugekehrte Ende des Gehäuses (1) für die Verschraubung mit einem nachgeordneten Teil der Druckmittelleitung einen Außengewindeabschnitt (29) aufweist.

23. Rohrbruchventil nach einem der Ansprüche 1 bis 22,
**dadurch gekennzeichnet,dass** die Außenabmaße des Gehäuses (1), insbesondere dessen Außengewindeabschnitte (27, 29), in genormter Größe ausgeführt sind.
